Europäisches Patentamt

European Patent Office

Office européen des brevets

(19)

(11) Veröffentlichungsnummer: **0 009 779**
B1

(12) EUROPÄISCHE PATENTSCHRIFT

(45) Veröffentlichungstag der Patentschrift:
17.08.83

(51) Int. Cl.³: **F 02 M 25/02**

(21) Anmeldenummer: 79103687.4

(22) Anmeldetag: 28.09.79

(54) Speisesystem zum Einführen von Wasser und/oder Wasserdampf in den Ansaugweg einer Brennkraftmaschine.

(30) Priorität: 04.10.78 DE 2843335

(43) Veröffentlichungstag der Anmeldung:
16.04.80 Patentblatt 80/8

(45) Bekanntmachung des Hinweises auf die Patenterteilung:
17.08.83 Patentblatt 83/33

(84) Benannte Vertragsstaaten:
AT BE CH FR GB IT NL SE

(56) Entgegenhaltungen:
BE-A-857 723
DE-A-2 535 041
DE-A-2 604 050

(73) Patentinhaber: Lohberg, Werner, Elsener Strasse 15,
D-4790 Paderborn (DE)

(72) Erfinder: Lohberg, Werner, Elsener Strasse 15,
D-4790 Paderborn (DE)

(74) Vertreter: Hanewinkel, Lorenz, Dipl.-Phys.,
Patentanwälte Dr.Ing. Heinz Nickels Dipl.-Phys. Lorenz
Hanewinkel Detmolder Strasse 26,
D-4800 Bielefeld 1 (DE)

BUNDESDRUCKEREI BERLIN

## Speisesystem zum Einführen von Wasser und/oder Wasserdampf in den Ansaugweg einer Brennkraftmaschine

Die Erfindung betrifft eine Vorrichtung zum Einführen von Wasser in flüssigem und/oder dampfförmigem Zustand in den Ansaugweg einer Brennkraftmaschine, umfassend einen Wasservorratsbehälter, ein von den Abgasen der Brennkraftmaschine einerseits und dem Wasser andererseits beaufschlagbaren Wärmetauscher und eine dem Wärmetauscher vorgeschaltete Wärmesperre, die aus einem in Gegenstromrichtung sperrenden Ventil und einem durch Ansaugunterdruck nicht öffnenden Ventilelement besteht, und eine Dosiereinrichtung zur Dosierung der dem Ansaugweg zuzuführenden Wassermenge und eine Steuereinrichtung, welche die Dosiereinrichtung in Abhängigkeit mindestens eines Betriebsparameters der Brennkraftmaschine steuert.

Es ist bekannt, Wassernebel und/oder Wasserdampf zur Verbesserung der Verbrennung und damit zur Erhöhung des Wirkungsgrades Brennkraftmaschinen zuzuführen. Die verbesserte Verbrennung führt zu einer Verringerung von CO- und Rußanteilen in den Abgasen.

Diese Einrichtungen für die Zuführung von Wassernebel oder -dampf besitzen eine Dosiereinrichtung zur Dosierung der dem Ansaugweg zuzuführenden Wassermenge und eine Steuereinrichtung, welche die Dosiereinrichtung in Abhängigkeit mindestens eines Betriebsparameters der Brennkraftmaschine steuert.

In DE-A-2 604 050 (Lohberg) ist ein Speisesystem für Brennkraftmaschinen beschrieben, denen ein Kraftstoff-Luftgemisch und Wasserdampf zugeführt wird, wobei das Wasser einem Wärmetauscher über eine Wärmesperre zugeführt wird und die Wassermenge durch eine drehzahlabhängige Pumpe und den Unterdruck im Ansaugstutzen der Brennkraftmaschine bestimmt wird.

In BE-A-857 723 (Delbruyere) wird ebenfalls ein Speisesystem dieser Art mit einer Dosiervorrichtung beschrieben, die über eine Steuervorrichtung die zugeführte Wassermenge abhängig vom Unterdruck im Ansaugstutzen steuert.

In DE-A-2 535 041 (Loos Sen.) wird als Dosiereinrichtung für denselben Zweck eine Wasserpumpe oder ein Regelventil vorgeschlagen, die durch das Gaspedal oder die Brennkraftmaschine angetrieben bzw. gesteuert werden. Außerdem wird die Wasserzufuhr bei zu geringer Verdampfertemperatur über das Ventil abgesperrt.

Trotz der vorgenannten Dosierungsmaßnahmen treten aber in den unterschiedlichen Betriebszuständen eines Kraftfahrzeuges zum Teil ungünstige Verhältnisse auf, die zu einer Überhitzung im Verbrennungsraum führen, wodurch die Bildung von Stickoxiden begünstigt wird.

Es ist deshalb Aufgabe der Erfindung, diese Überhitzungszustände zu vermeiden, ohne die übrigen Parameter der Verbrennung zu verschlechtern. Als Lösung wird erfindungsgemäß vorgeschlagen, daß die Temperatur des dem Ansaugweg der Brennkraftmaschine zugeführten Wassers und/oder Wasserdampfes in Abhängigkeit von Betriebsparametern der Brennkraftmaschine regelbar ist.

Zur Regelung der Temperatur des Gemisches im Ansaugweg der Brennkraftmaschine und insbesondere zur Senkung der Temperatur des Gemisches im Schubbetrieb der Brennkraftmaschine wird erfindungsgemäß vorgeschlagen, daß eine Vorrichtung vorgegeben ist, die die Temperatur des dem Ansaugweg zugeführten Wassers und/oder Wasserdampfes in Abhängigkeit von Betriebsparametern regelt, die durch mindestens einen an der Brennkraftmaschine angeordneten Meßfühler, z. B. Temperaturfühler, Unterdruckfühler oder Drehzahlfühler wie Unterbrecher ermittelt sind.

Diese Lösung ist dabei sowohl für sich als auch in besonders vorteilhafter Weise in Verbindung mit der vorstehend beschriebenen Dosiereinrichtung verwendbar. Die Regelung der Temperatur des zugeführten Wasserdampfes kann sowohl in Abhängigkeit der Temperatur des Gemisches in dem Ansaugweg stromabwärts der Drosselklappe al auch in Abhängigkeit des Unterdruckes stromabwärts der Drosselklappe geregelt werden.

Die Temperaturregelung kann etwa dadurch erfolgen, daß dem Wärmetauscher ein Kühler nachgeschaltet ist und daß die Durchflußmenge des Kühlmediums in Abhängigkeit des Betriebszustandes der Brennkraftmaschine regelbar ist. Eine andere Möglichkeit besteht darin, daß dem Wärmetauscher eine Dampfmischeinrichtung nachgeschaltet ist mit einer durch den Betriebsparameter der Brennkraftmaschine steuerbaren Ventileinrichtung zur Zuführung eines Dampfes niedrigerer Temperatur, um ein Dampfgemisch zu erhalten, das die gewünschte Temperatur aufweist.

Gemäß einer bevorzugten Ausführungsform der Erfindung ist dem Wärmetauscher eine Mischeinrichtung nachgeschaltet, in welcher dem vom Wärmetauscher kommenden Dampf Wasser in einer vom Betriebszustand der Brennkraftmaschine abhängigen Menge beimischbar ist. Die dadurch bewirkte Nebelbildung führt zu einer raschen Senkung der Dampftemperatur, so daß eine zu starke Erhitzung des Gemisches vor der Brennkammer durch den eintretenden Dampf vermieden wird.

Gemäß einer einfachen Ausführungsform weist die Mischeinrichtung ein im Strömungsweg des Wasserdampfes liegendes Venturirohr auf, wobei eine Verteileinrichtung den Zufluß von Wasser zum Düsenbereich des Venturirohres in Abhängigkeit vom Betriebszustand der Brennkraftmaschine steuert. Vorzugsweise ist die Verteileinrichtung als Magnetventil ausgebildet, das über eine elektrische Steuerschaltung

betätigbar ist. Alternativ hierzu könnte auch eine zweite Pumpe das Wasser zur Mischeinrichtung fördern. Vorzugsweise erfolgt die Betätigung des Magnetventils in Abhängigkeit eines Temperaturfühlers im Ansaugweg der Brennkraftmaschine stromabwärts der Drosselklappe. Der Temperaturfühler kann so ausgebildet sein, daß er bei Ansteigen der Temperatur im Ansaugweg über einen vorbestimmten Schwellenwert einen Impuls abgibt, der über einen Impulsformer auf die Basis eines Schalttransistors gegeben wird, der dadurch leitend geschaltet wird und die Wicklung des Magnetventils speist. Als Temperaturfühler werden für den vorstehend beschriebenen Fall ebenso wie für die weiter oben beschriebenen Ausführungsbeispiele Widerstände vorgeschlagen, deren Widerstandswerte sich innerhalb eines eng begrenzten Temperaturbereiches sprunghaft ändern. Solche Widerstände sind beispielsweise Metalloxidwiderstände.

Die Verteileinrichtung arbeitet in Wechselwirkung mit einer Dosiervorrichtung. Um die in den Ansaugweg der Brennkraftmaschine eingeführte Wasserdampfmenge der dem jeweiligen Betriebszustand der Brennkraftmaschine entsprechenden Brennstoffmenge anzupassen, wird vorgeschlagen, daß eine bekannte Dosiereinrichtung vor der Verteileinrichtung stromaufwärts des Wärmetauschers angeordnet wird und die Dosiereinrichtung in Abhängigkeit der Drehzahl der Brennkraftmaschine steuerbar ist. Somit wird der Verteileinrichtung nur so viel Wasser zugeführt, daß die dem jeweiligen Betriebszustand der Brennkraftmaschine entsprechende Wassermenge erzeugt wird.

Um zu vermeiden, daß dem Wärmetauscher Wasser zugeführt wird, solange das Wasser im Wärmetauscher noch nicht vollständig verdampft werden kann, wird vorgeschlagen, daß die Dosiereinrichtung in Abhängigkeit der Abgastemperatur im Wärmetauscher derart steuerbar ist, daß die Wasserzufuhr zum Wärmetauscher erst bei Erreichen eines vorbestimmten Temperaturschwellenwertes erfolgt.

Wie Versuche mit den bisher bekannten Systemen ergeben haben, tritt im Schubbetrieb der Brennkraftmaschine, d. h., bei relativ hoher Drehzahl und geschlossener Drosselklappe ein sehr hoher Anteil an Stickoxiden in den Abgasen auf. Die Ursache hierfür ist, daß durch den starken Unterdruck viel heißer Wasserdampf angesaugt wird. Bei geschlossener Drosselklappe verdampft aber nur wenig Brennstoff, weshalb wenig Verdampfungswärme dem Wasserdampf entzogen wird. Dies führt zu hohen Anfangstemperaturen und damit zur Erhöhung der Verbrennungstemperatur und vermehrter Stickoxidbildung. Ferner tritt im Betrieb in großen Höhen (etwa ab 2000 m) wegen der geringeren Dichte der Luft leicht eine Überhitzung der Brennkraftmaschine bei starkem Dampfzustrom auf, was zu einem ähnlichen Resultat führt.

Um diesen Nachteil zu beseitigen, ist die Dosiereinrichtung in Abhängigkeit der Temperatur im Ansaugweg der Brennkraftmaschine stromabwärts der Drosselklappe derart steuerbar, daß bei Erreichen eines Temperaturschwellenwertes die Wasserzufuhr zur Verteileinrichtung gedrosselt oder abgeschaltet wird.

Es ist auch möglich, die Dosiereinrichtung in Abhängigkeit des Unterdruckes im Ansaugweg der Brennkraftmaschine in der Weise zu steuern, daß mit steigendem Unterdruck die Zufuhr von Wasser zur Verteileinrichtung gedrosselt wird. Auch hierdurch lassen sich die beim Schubbetrieb auftretenden Schwierigkeiten lösen. Dabei genügt es, wenn die Drosselung der Wasserzufuhr oder das Abschalten der Wasserzufuhr zur Verteileinrichtung bei einem gewissen Unterdruckschwellenwert erfolgt. Die Steuereinrichtung zur Betätigung der Dosiereinrichtung kann in diesem Falle beispielsweise eine Unterdruckdose umfassen, die an eine stromabwärts der Drosselklappe gelegene Stelle des Ansaugweges der Brennkraftmaschine angeschlossen ist und bei Überschreiten eines Unterdruckschwellenwertes einen Endschalter betätigt, der seinerseits zu einem Abschalten oder zur Drosselung der Wasserzufuhr führt.

In einer bevorzugten Ausführungsform der Erfindung umfaßt die Dosiervorrichtung eine Pumpe, deren Förderleistung durch die Drehzahl der Brennkraftmaschine gesteuert ist. Vorzugsweise ist die Pumpe von einer Membranpumpe gebildet, deren Membran mittels eines an ihr befestigten und als Tauchanker eines Elektromagneten ausgebildeten Stößels betätigbar ist, wobei die Wicklung des Elektromagneten mit einer zur Motordrehzahl proportionalen Frequenz erregbar ist. Die Drehzahl der Brennkraftmaschine kann beispielsweise an dem Unterbrecher der Brennkraftmaschine abgetastet werden. Vorzugsweise weist die Steuereinrichtung in diesem Falle einen mit dem Unterbrecher der Brennkraftmaschine gekoppelten Impulsgeber auf, der über eine Kippschaltung einen Schalter zum Ein- und Ausschalten der Erregerwicklung der Pumpe betätigt. Um die Lebensdauer der Pumpe zu verlängern, ist es ratsam, die Impulszahl zu verringern. Dies kann beispielsweise dadurch erfolgen, daß zwischen Impulsgeber und Kippschaltung ein Impulsfrequenzteiler zur Herabsetzung der Impulsfrequenz geschaltet ist. Die Herabsetzung der Impulsfrequenz kann auch dazu verwendet werden, die Förderleistung der Pumpe beispielsweise im Schubbetrieb der Brennkraftmaschine zu drosseln. Hierzu kann ein weiterer Impulsfrequenzteiler vorgesehen sein, der in Abhängigkeit der Temperatur im Ansaugweg der Brennkraftmaschine derart gesteuert ist, daß beim Ansteigen der Temperatur im Ansaugweg der Brennkraftmaschine über einen vorbestimmten Temperaturschwellenwert der weitere Impulsfrequenzteiler eingeschaltet und damit die Impulsfrequenz gesenkt wird.

Die Pumpe ist vorzugsweise integral mit der Wärmesperre ausgebildet. Dies kann in der Weise erfolgen, daß die Pumpe eine mit einem Einlaßventil und einem Auslaßventil in Verbindung stehende Pumpenkammer aufweist, in der ein durch die Membran hindurch betätigbarer Pumpenkolben derart angeordnet ist, daß er bei Nichterregung der Wicklung des Elektromagneten unter der Wirkung einer Rückholfeder den Durchgang zwischen Einlaß- und Auslaßventil sperrt. Damit wird, wie bei der aus der DE-A-2 604 050 bekannten Wärmesperre, eine Übertragung von Wärme vom Wärmetauscher auf den Wasservorratstank und auf die Dosiereinrichtung vermieden.

Gemäß einer anderen Ausführungsform der Erfindung umfaßt die Dosiereinrichtung eine Pumpe und eine stromabwärts der Pumpe angeordnete Dosierventilanordnung, die in Abhängigkeit der Drehzahl der Brennkraftmaschine im Sinne eines größeren Durchsatzes bei steigender Drehzahl steuerbar ist. Um den Steuerungsaufwand so gering wie möglich zu halten, umfaßt die Dosierventilanordnung vorzugsweise mindestens zwei Dosierventile, die mittels der Steuereinrichtung bei verschiedenen Drehzahlwerten betätigbar sind. Das heißt, bei Überschreiten eines bestimmten ersten Drehzahlwertes wird das erste Dosierventil geöffnet, während das zweite Dosierventil erst bei Überschreiten eines höher liegenden zweiten Drehzahlwertes geöffnet wird. Vorzugsweise sind die Dosierventile von Magnetventilen gebildet, wobei die Steuerschaltung einen mit dem Unterbrecher der Brennkraftmaschine gekoppelten Impulsgeber und einen diesem nachgeschalteten Frequenz-/Spannungswandler aufweist, dessen Ausgangssignal zwei auf verschiedene Schwellenwerte eingestellten Komparatoren zugeführt wird, deren jeder über einen Schalter mit der Erregerwicklung eines der Magnetventile verbunden ist.

Bei der Pumpe der zuletzt besprochenen Ausführungsform kann es sich um eine übliche elektrisch oder mechanisch angetriebene Pumpe handeln.

Bei Versuchen hat sich gezeigt, daß die günstigsten Zuführungsstellen für das Wasser und/oder den Wasserdampf zum Ansaugweg der Brennkraftmaschine stromaufwärts und stromabwärts der Stelle liegen, an welcher die Vermischung von Luft und Brennstoff erfolgt, d. h. also üblicherweise stromaufwärts und stromabwärts des Vergasers. Dabei wird gemäß einer bevorzugten Ausführungsform etwa 75% des Dampfes stromaufwärts der Drosselklappe und etwa 25% stromabwärts der Drosselklappe zugeführt.

Weitere Merkmale und Vorteile der Erfindung ergeben sich aus den abhängigen Patentansprüchen und der folgenden Beschreibung, welche in Verbindung mit den beiliegenden Figuren die Erfindung anhand von Ausführungsbeispielen erläutert. Es zeigt

Fig. 1 eine schematische Darstellung einer ersten Ausführungsform des erfindungsgemäßen Speisesystems,

Fig. 2 eine schematische Darstellung einer zweiten Ausführungsform des erfindungsgemäßen Speisesystems,

Fig. 3 eine vergrößerte Darstellung der in den Fig. 1 und 2 dargestellten Pumpe gemäß einer ersten Ausführungsform der Erfindung,

Fig. 4 eine vergrößerte Darstellung der in den Fig. 1 und 2 dargestellten Pumpe gemäß einer zweiten Ausführungsform der Erfindung,

Fig. 5 ein schematisches Schaltbild der Steuerschaltung für ein Speisesystem gemäß Fig. 1 und

Fig. 6 ein schematisches Schaltbild der Steuerschaltung für ein Speisesystem gemäß Fig. 2.

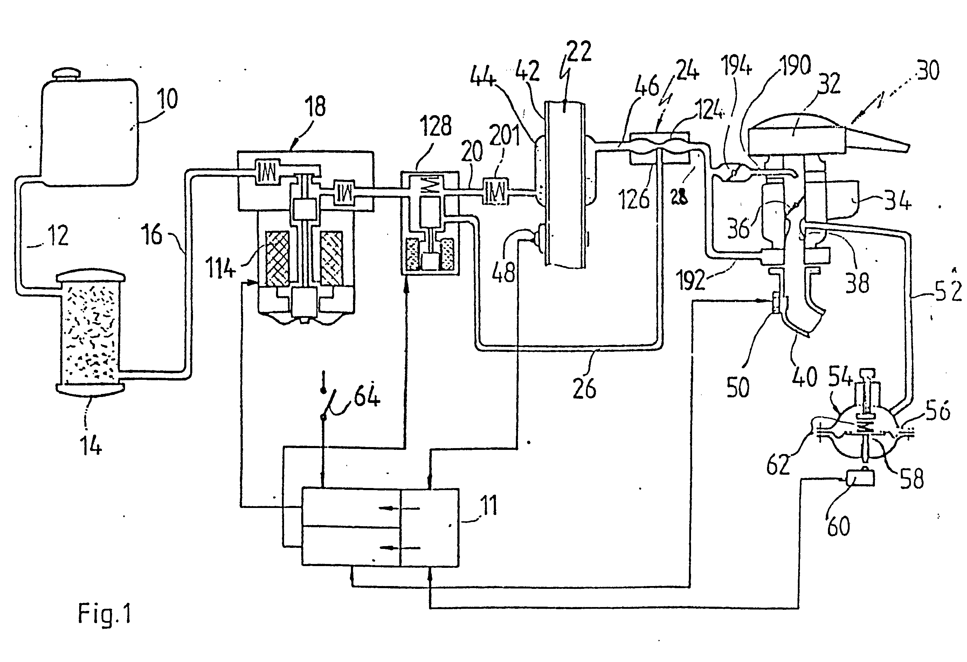

Das in Fig. 1 dargestellte Speisesystem zum Einführen von Wasser in flüssigem und/oder dampfförmigem Zustand in den Ansaugweg einer Brennkraftmaschine umfaßt einen Wasservorratsbehälter 10, einen mit diesem über eine Leitung 12 verbundenen Filter 14, an den sich über eine Leitung 16 eine allgemein mit 18 bezeichnete Pumpe anschließt. Von der Druckseite der Pumpe 18 führt über eine Verteileinrichtung in Form eines steuerbaren 2-Wege-Magnetventils 128 und ein Ventil 201 eine Leitung 20 zu einem Wärmetauscher 22, an den sich eine Mischeinrichtung 24 zur Mischung des im Wärmetauscher 22 gebildeten Dampfes mit Wasser anschließt, das unter Umgehung des Wärmetauschers 22 von der Druckseite der Pumpe 18 über das Magnetventil 128 und eine Leitung 26 der Mischeinrichtung 24 direkt zugeführt wird. Von dort führt eine Leitung 28 in noch näher zu beschreibender Weise zu dem Gemischbildungssystem 30 einer nicht dargestellten Brennkraftmaschine, mit einem Luftfilter 32, einem Vergaser 34 mit Drosselklappe 36 und Venturidüse 38 sowie einer Ansaugleitung 40.

Der Wärmetauscher 22 umfaßt eine von den heißen Abgasen der Brennkraftmaschine durchströmte Abgasleitung 42, die von einem Außenmantel 44 umgeben ist, in den über die Leitung 20 Wasser von der Pumpe 18 her einströmt und aus dem das Wasser nach dem Verdampfen an der heißen Abgasleitung 42 über die Leitung 46 zur Mischeinrichtung 24 hin ausströmt.

An der Abgasleitung 42 ist ein erster Temperaturfühler 48 zur Messung der Abgastemperatur angeordnet.

An der Ansaugleitung 40 ist stromabwärts des Vergasers 34 ein zweiter Temperaturfühler 50 zur Messung der Temperatur des Gemisches unmittelbar vor dem Eintreten in die Brennkammer der Brennkraftmaschine angeordnet. Beide Temperaturfühler 48 und 50 sind vorzugsweise von temperaturabhängigen Widerständen gebildet, deren Widerstandsänderung in einem engen Temperaturbereich stattfindet. Solche temperaturabhängigen Widerstände sind z. B. bestimmte Metalloxidwiderstände (MOXIE).

An die Ansaugleitung 40 im Bereich der Venturidüse 38 ist über eine Unterdruckleitung 52 eine Unterddruckdose 54 mit einer federbelasteten Membran 56 angeschlossen, an welcher

ein durch die Membran auf- und abbewegbarer Stößel 58 befestigt ist. Dieser betätigt im Ruhezustand der Unterdruckdose 54, d. h., wenn auf der der Unterdruckleitung 52 zugekehrten Seite der Membran 56 kein oder nur ein geringer Unterdruck anliegt, einen Endschalter 60, dessen Funktion im weiteren noch näher erläutert wird. Bei Auftreten eines starken Unterdruckes stromabwärts der Drosselklappe 36 wird die Membran 56 und mit ihr der Stößel 58 entgegen der Federkraft der Feder 62 bewegt und dabei der Stößel 58 von dem Endschalter 60 abgehoben.

Ferner erkennt man in Fig. 1 den schematisch angedeuteten Unterbrecher 64 der Brennkraftmaschine. Dieser liefert zusammen mit den Temperaturfühlern 48 und 50 sowie dem Endschalter 60 die Eingangswerte für eine allgemein mit 11 bezeichnete Steuerschaltung, wie dies durch die von dem Unterbrecher 64, den Temperaturfühlern 48, 50 und dem Endschalter 60 zur Steuerschaltung 11 führenden Pfeile angedeutet ist. Die Steuerschaltung 11 steuert in Abhängigkeit der so erhaltenen Eingangswerte die Pumpe 18 sowie das Magnetventil 128, wie dies durch die von der Steuereinrichtung 11 zu der Pumpe 18 bzw. dem Magnetventil 128 führenden Pfeile angedeutet ist. Bevor auf die Ausbildung der Steuerschaltung und die Arbeitsweise des Spülsystems eingegangen wird, sollen zunächst zwei Ausführungsbeispiele der in Abhängigkeit der Drehzahl der Brennkraftmaschine angetriebenen Membranpumpe 18 beschrieben werden.

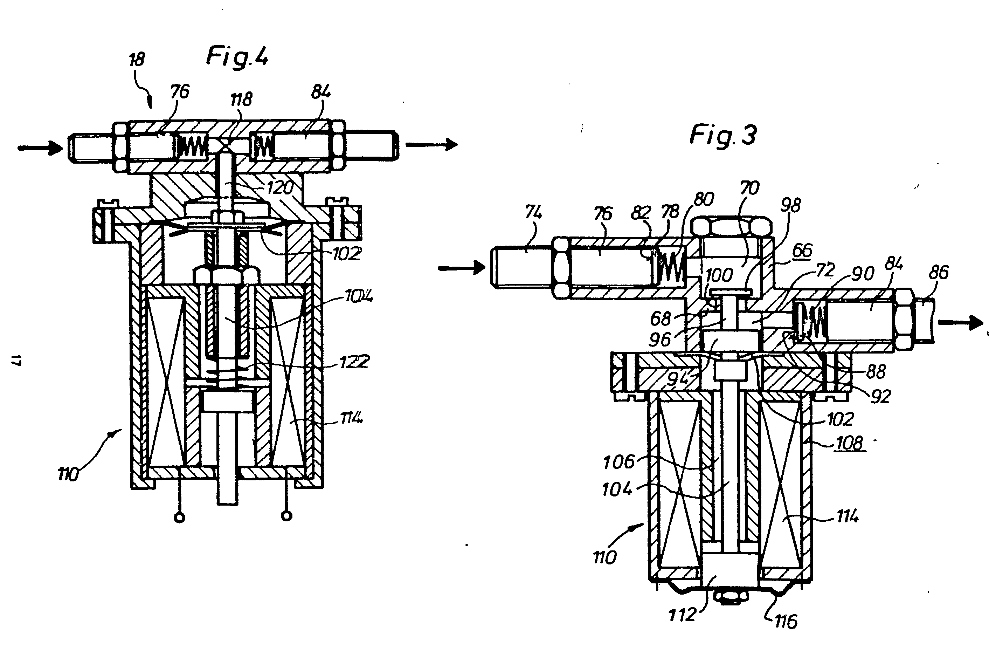

Die in Fig. 3 dargestellte Ausführungsform umfaßt ein Pumpengehäuse 66 mit einer Pumpenkammer, die durch einen nach radial innen weisenden Ringansatz 68 in zwei Kammerhälften 70 und 72 unterteilt ist. Die obere Kammerhälfte 70 ist an einen Einlaßstutzen 74 über ein Einlaßventil 76 angeschlossen. Das Einlaßventil 76 weist eine Ventilplatte 78 auf, die mittels einer Feder 80 gegen einen Ventilsitz 82 gespannt wird. Die untere Kammerhälfte 72 ist über ein Auslaßventil 84 an einen Auslaßstutzen 86 angeschlossen. Das Auslaßventil 84 weist eine Ventilplatte 88 auf, die mittels einer Feder 90 gegen einen Ventilsitz 92 gespannt wird.

In der unteren Kammerhälfte 72 ist ein Kolben 94 auf- und abbewegbar, der an seinem der Kammerhälfte 70 zugewandten Ende über einen zylindrischen Fortsatz 96 ein Ventilelement 98 trägt, das in der unteren Stellung des Kolbens 94 die Öffnung 100 in dem Ringansatz 68 verschließt.

Der Kolben 94 ist an einer Membran 102 befestigt, an deren dem Kolben 94 abgewandten Seite ein Stößel 104 befestigt ist, der in die Mittelbohrung 106 eines mit seinem topfförmigen Gehäuse 108 an dem Pumpengehäuse 66 angeflanschten Elektromagneten 110 eintaucht. Dabei trägt der Stößel 104 an seinem membranfernen Ende eine kolbenartige Verdickung 112, die bei Nichterregung der Wicklung 114 des Elektromagneten 110 teilweise aus der Mittelbohrung 106 herausragt und in dieser Lage durch eine am topfförmigen Gehäuse 108 befestigte Blattfeder 116 gehalten wird. Wird die Wicklung 114 erregt, so wird die Verdickung 112 gegen den Widerstand der Blattfeder in die Mittelbohrung 106 hineingezogen und dabei der Kolben 94 über den Stößel 104 und die Membran 102 nach oben gedrückt. Dabei wird die in der unteren Kammerhälfte 72 enthaltene Flüssigkeit durch das Austrittsventil 84 aus der Pumpenkammer herausgedrückt. Beim Abschalten des Elektromagneten 110 wird der Kolben 94 über die Membran 102 und den Stößel 104 von der Blattfeder 116 wieder nach unten gedrückt, wobei über das Einlaßventil 76 Flüssigkeit in die obere Kammerhälfte 70 angesaugt wird. Die Membran 102 dient hauptsächlich zur Abdichtung der Pumpenkammer 70, 72, so daß der Kolben 94 einen geringfügig geringeren Durchmesser als die untere Kammerhälfte 72 besitzen kann. Dies hat den Vorteil, daß bei einer Erwärmung der Pumpe 18 der Kolben 94 nicht aufgrund der Ausdehnung des Materials klemmen kann.

Die beiden Ventile 76 und 84 bilden zusammen mit dem Ventilelement 98, das mit dem Pumpenkolben 94 betätigt wird, eine Wärmesperre, die eine Übertragung von Wärme aus dem Wärmetauscher 22 nach rückwärts auf den Wasservorratsbehälter 10 verhindert. Gegenüber der herkömmlichen Wärmesperre hat die Pumpe 18 jedoch einen entscheidenden Vorteil. Bei einer selbständig arbeitenden Wärmesperre saugt die Brennkraftmaschine den Wasserdampf aus dem Wärmetauscher ab, bis der an der Wärmesperre anliegende Wasserdruck die Ventile der Wärmesperre öffnen kann. Da zwischen dem maximalen Dampfdruck und dem Wasservordruck ein erheblicher Unterschied besteht, wird eine ständig schwankende Dampfmenge an das Ansaugsystem abgegeben, die noch dazu um so geringer ist, je geringer der Unterdruck in dem Ansaugsystem ist. Gerade bei geringem Unterdruck, was einer Öffnung der Drosselklappe entspricht, wird jedoch viel Brennstoff angesaugt und folglich müßte auch viel Wasserdampf zugeführt werden, um die Verdampfungswärme für den Brennstoff bereit zu stellen. Dies wird nun durch die Pumpe 18 geleistet, deren Hubzahl von der Drehzahl der Brennkraftmaschine abhängig ist. So steigt, wie man leicht erkennen kann, die vom Wärmetauscher bereitgestellte Dampfmenge proportional zur Drehzahl der Brennkraftmaschine, da die Pumpe 18 mit steigender Drehzahl mehr Wasser in dem Wärmetauscher fördert. Das Eingangsventil 76 arbeitet dabei als Rückschlagventil zum Wasserbehälter 10 und das Auslaßventil 84 verhindert ein Zurückwirken des Wasserdampfes auf die Pumpe 18.

Die in Fig. 4 beschriebene zweite Ausführungsform der Pumpe 18 unterscheidet sich von der vorstehend beschriebenen Pumpe im wesentlichen dadurch, daß Einlaßventil 76 und Auslaßventil 84 nur durch eine Bohrung 118 voneinander getrennt in Flucht miteinander liegen. In der Bohrung 118 ist durch Stößel 104 mit der Membran 102 gemeinsam ein Kolben 120 bewegbar, der sowohl die Aufgabe hat, die Bohrung 118 abzusperren als auch das Wasser durch das Einlaßventil 76 abzusaugen und durch das Auslaßventil 84 abzugeben. Wenn kein Strom durch die Wicklung 114 fließt, drückt die Schraubenfeder 122 den Kolben 120 über den Stößel 104 in die Bohrung 118. Im Betrieb arbeitet die Pumpe durch die Membran 102 und die Ventile 76 und 84 und zusätzlich mit dem Kolben 120 als Pumpe mit einem im Vergleich zu einer einfachen Membranpumpe erhöhten Druck.

Die in Fig. 1 dargestellte Mischeinrichtung 24 umfaßt ein zwischen den Leitungen 46 und 28 liegendes Venturirohr 124, das von dem aus dem Außenmantel 44 des Wärmetauschers 22 abgezogenen Wasserdampf durchströmt wird. In den Düsenbereich des Venturirohres 124 mündet eine mit der Leitung 26 verbundene Düse 126, wobei die Verbindung zwischen der Pumpe 18 und der Düse 126 durch ein Magnetventil 128 absperrbar ist. Durch die Düse 126 wird bei geöffnetem Magnetventil 128 Wasser in das Venturirohr 124 eingespritzt und beim Eintritt in den durchströmenden heißen Dampf in feine Nebeltröpfchen zerstäubt. Dadurch wird der durchströmende heiße Dampf abgekühlt.

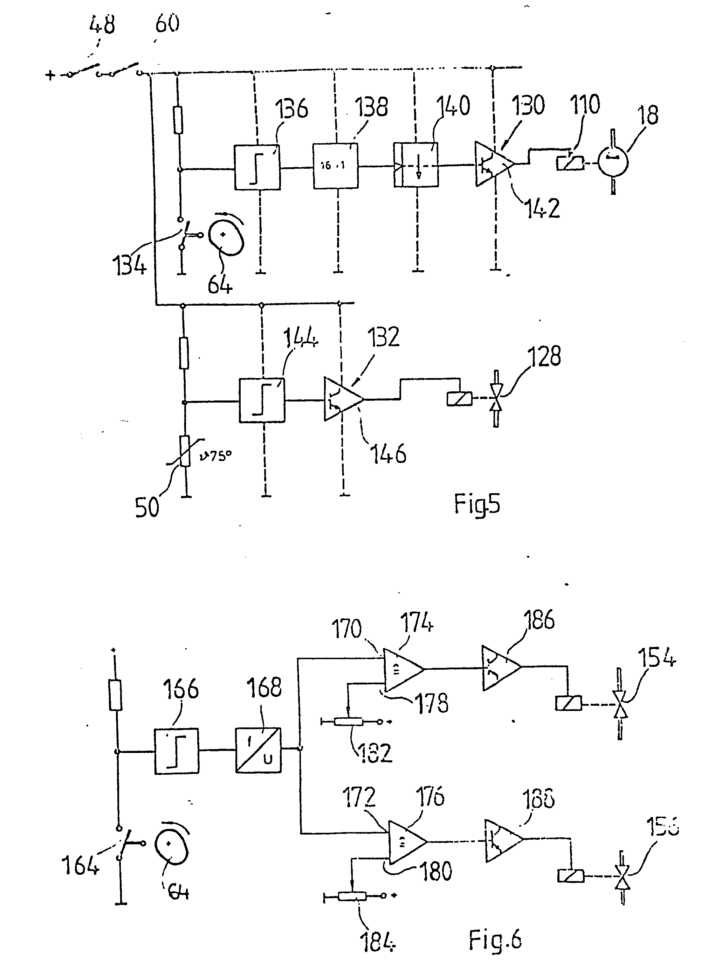

Die in Fig. 5 dargestellte Steuerschaltung 11 für das in Fig. 1 wiedergegebene Speisesystem umfaßt eine Pumpensteuerschaltung 130 und eine Mischersteuerschaltung 132. Beide sind über den Endschalter 60 und den Thermofühler 48 an den positiven Pol einer Spannungsquelle angeschlossen. Wird der Endschalter 60 durch den Stößel der Unterdruckdose 54 aufgrund eines starken Unterdruckes in der Ansaugleitung 40 geöffnet, so werden weder die Pumpe 18 noch das Magnetventil 128 mit Strom versorgt, so daß jegliche Wasserzufuhr zum Ansaugsystem der Brennkraftmaschine unterbleibt. Das gleiche gilt, solange die Abgastemperatur in der Abgasleitung 42 einen bestimmten Temperaturschwellwert noch nicht erreicht hat, der im vorliegenden Beispiel bei etwa 110°C liegt. Diese Temperatur ermöglicht eine Verdampfung des dem Wärmetauscher 22 zugeführten Wassers. Unter 100°C dagegen würde das Wasser nicht vollständig verdampft.

Die Pumpensteuerschaltung 130 umfaßt einen durch den Unterbrecher 64 der Brennkraftmaschine gesteuerten Impulsgeber 134. Die von dem Impulsgeber 134 erzeugten Impulse werden einem Impulsformer 136 zugeleitet. Die Impulsfrequenz wird in einem Impulsfrequenzteiler 138 im Verhältnis 16 : 1 untersetzt. In einem dem Impulsfrequenzteiler 138 folgenden monostabilen Multivibrator 140 wird ein Impuls von etwa 20 Millisekunden Dauer erzeugt. Der Ausgang des monostabilen Multivibrators 140 ist mit der Basis eines Leistungstransistors 142 verbunden, der durch das Ausgangssignal des monostabilen Multivibrators leitend geschaltet wird, wodurch der Linearmotor 110 bzw. die Wicklung 114 der Pumpe 18 erregt und damit diese in Gang gesetzt wird.

Dem Impulsfrequenzteiler 138 könnte noch ein weiterer Impulsfrequenzteiler nachgeschaltet sein, der in Abhängigkeit des Thermofühlers 50 bei Ansteigen der Temperatur über einen bestimmten Schwellenwert in der Ansaugleitung 40 die Frequenz beispielsweise noch einmal halbiert und somit die Leistung der Pumpe 18 vermindert.

Die Mischersteuerschaltung 132 wird durch den Thermofühler 50 gesteuert. Dieser erzeugt bei Ansteigen der Temperatur in der Ansaugleitung 40 über etwa 75°C einen Impuls, der einem Impulsformer 144 zugeführt wird, der seinerseits die Basis eines Transistors 146 steuert. Dadurch wird der Transitor 146 leitend geschaltet und damit die Wicklung des Magnetventils 128 erregt. Bei Stromfluß durch die Wicklung des Magnetventils 128 wird dieses umgeschaltet, so daß dem durch das Venturirohr 124 fließenden Dampfstrom Wasser beigemischt wird.

Wie bereits oben ausgeführt wurde, sind die Thermofühler von temperaturabhängigen Widerständen gebildet. Um ein sicheres Schalten mit diesen temperaturabhängigen Widerständen zu erreichen, zeigen diese in ihrem Schaltbereich ein Hystereseverhalten.

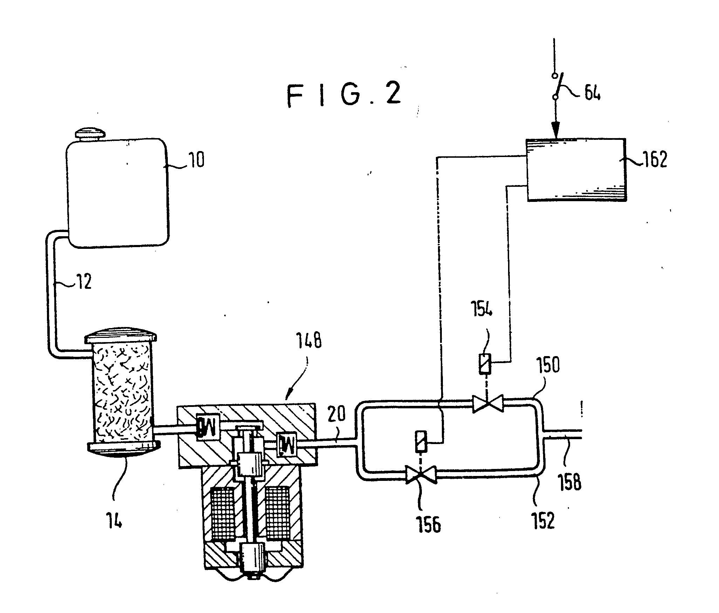

Die in Fig. 2 dargestellte Ausführungsform der erfindungsgemäßen Vorrichtung unterscheidet sich von der Ausführungsform gemäß Fig. 1 dadurch, daß die Pumpe 148 nicht drehzahlabhängig angetrieben ist. Es kann hier jede beliebige geeignete Pumpe verwendet werden. Die sich an die Druckseite der Pumpe 148 anschließende Leitung 20 gabelt sich in zwei Zweige 150 und 152, die durch jeweils ein Magnetventil 154 bzw. 156 absperrbar sind. Stromabwärts der beiden Magnetventile 154 und 156 vereinigen sich die beiden Leitungszweige 150 und 152 wieder zu einer Leitung 158.

Die beiden Magnetventile 154 und 156 sind über eine Ventilsteuerschaltung 162 in Abhängigkeit der Drehzahl bzw. der Schalthäufigkeit des Unterbrechers 64 der Brennkraftmaschine steuerbar.

Die Ventilsteuerschaltung 162 ist in Fig. 6 wiedergegeben. Mit dem Unterbrecher 64 ist ein Impulsgeber 164 gekoppelt. Die von ihm erzeugten Impulse werden über einen Impulsformer auf einen Frequenzspannungswandler 168 gegeben. Das von diesem erzeugte Spannungssignal wird jeweils dem einen Eingang 170, 172 eines Komparators 174 bzw. 176 zugeführt. An dem jeweils anderen Eingang 178, 180 des Komparators 174 bzw. 176 liegt eine über einen veränderlichen Widerstand 182 bzw. 184 einstellbare Spannung an. Dabei sind die beiden Spannungen an den Widerständen 182, 184 verschieden. Erreicht das Spannungssignal an dem jeweiligen Eingang 170 bzw. 172 der Komparatoren 174 und 176 den am jeweils anderen Eingang 178 bzw. 180 anliegenden Schwellenwert, so erscheint an dem Komparator ein Ausgangssignal, welches jeweils einen Leistungstransistor 186 bzw. 188 leitend schaltet. Dadurch werden die Ventile 154 bzw. 156 geöffnet. Da die Schwellenwerte an den beiden Komparatoren 174 und 176 verschieden hoch eingestellt sind, öffnen die Magnetventile 154 und 156 bei unterschiedlichen Drehzahlen der Brennkraftmaschine, so daß die dem Wärmetauscher 22 zugeführte Wassermenge entsprechend der Drehzahl der Brennkraftmaschine dosiert werden kann.

Die Anordnung Fig. 2 zeigt eine Dosiervorrichtung, die anstatt der Dosiervorrichtung in Fig. 1 eingesetzt werden kann. Fig. 2 schließt mit der Leitung 158 an den Eingang der Verteilanordnung 128 (Fig. 1) an.

Die Pumpe 148 kann ebenfalls von einer der anhand der Fig. 3 und 4 beschriebenen Pumpen gebildet sein. Es genügt jedoch auch eine einfache übliche mechanisch angetriebene Pumpe.

Wie man in der Fig. 1 erkennt, wird der Wasserdampf dem Ansaugsystem über zwei Leitungen 190 und 192 zugeführt. Die Leitung 190 mündet oberhalb des Vergasers 34 in die Ansaugleitung 40. Über diese Leitung werden etwa 75% des Wasserdampfes in die Ansaugleitung 40 eingeführt. Die untere Leitung 192 mündet unterhalb des Vergasers 34 in die Ansaugleitung 40. Über diese Leitung werden ca. 25% des heißen Dampfes zugeführt. Um zu vermeiden, daß bei einem Abschalten der Dampfzufuhr und bei geschlossener Drosselklappe Luft über die Leitungen 190 und 192 unter Umgehung der Drosselklappe 36 angesaugt wird, ist in der Leitung 190 ein Absperrorgan 194 angeordnet. Es reicht, unter Umständen auch die Verbindungsleitung so zu gestalten, daß sie einen genügend hohen Durchflußwiderstand für die Luft aufweist. So könnte beispielsweise die Verbindungsleitung als Schlauch mit einer eingelegten Spirale ausgebildet sein.

Es ist noch zu bemerken, daß anstelle der Unterdruckdose 54 auch ein Kontakt an der Drosselklappe oder an dem Gasgestänge der Brennkraftmaschine benutzt werden könnte, um den Schubbetrieb festzustellen. Hierbei wird aber nicht der Fall des Fahrens in großen Höhen oder u. a. zur Überhitzung der Brennkraftmaschine führenden Bedingungen erfaßt.

Das erfindungsgemäße Speisesystem liefert eine Anpassung der einzuspeisenden Wasserdampfmenge und/oder -nebelmenge an den jeweiligen Betriebszustand der Brennkraftmaschine, so daß eine Überhitzung des Gemisches vor dem Eintritt in den Brennraum der Brennkraftmaschine vermieden und damit insbesondere die Produktion von Stickoxiden wesentlich herabgesetzt werden kann.

**Patentansprüche**

1. Vorrichtung zum Einführen von Wasser in flüssigem und/oder dampfförmigem Zustand in den Ansaugweg (40) einer Brennkraftmaschine, umfassend einen Wasservorratsbehälter (10), ein von den Abgasen der Brennkraftmaschine einerseits und dem Wasser andererseits beaufschlagbaren Wärmetauscher (22) und eine dem Wärmetauscher (22) vorgeschaltete Wärmesperre (201, 84, 98; 201, 84, 120), die aus einem in Gegenstromrichtung sperrenden Ventil (201, 84) und einem durch Ansaugunterdruck nicht öffnenden Ventilelement (98, 120) besteht, und eine Dosiereinrichtung (18, 154, 156) zur Dosierung der dem Ansaugweg zuzuführenden Wassermenge und eine Steuereinrichtung (11, 162), welche die Dosiereinrichtung (18, 154, 156) in Abhängigkeit mindestens eines Betriebsparameters der Brennkraftmaschine steuert, dadurch gekennzeichnet, daß eine Vorrichtung (24, 26, 128, 11) vorgegeben ist, die die Temperatur des dem Ansaugweg (40) zugeführten Wassers und/oder Wasserdampfes in Abhängigkeit von Betriebsparametern regelt, die durch mindestens einen an der Brennkraftmaschine angeordneten Meßfühler, z. B. Temperaturfühler (48, 50), Unterdruckfühler (60) oder Drehzahlfühler wie Unterbrecher (64), ermittelt sind.

2. Vorrichtung nach Anspruch 1, dadurch gekennzeichnet, daß der Temperaturfühler (50) im Ansaugweg (40) angeordnet ist.

3. Vorrichtung nach Anspruch 1 oder 2, dadurch gekennzeichnet, daß der Unterdruckfühler (60) im Ansaugweg (40) angeordnet ist.

4. Vorrichtung nach einem der Ansprüche 1 bis 3, dadurch gekennzeichnet, daß dem Wärmetauscher (22) ein Kühler nachgeschaltet ist und daß die Durchflußmenge des Kühlmediums in Abhängigkeit von Betriebsparametern der Brennkraftmaschine regelbar ist.

5. Vorrichtung nach einem der Ansprüche 1 bis 3, dadurch gekennzeichnet, daß dem Wärmetauscher (22) eine Dampfmischeinrichtung nachgeschaltet ist mit einer durch Betriebsparameter der Brennkraftmaschine steuerbaren Ventileinrichtung zur Zuführung eines Dampfes, um ein Dampfgemisch bestimmter Temperatur einzustellen.

6. Vorrichtung nach einem der Ansprüche 1 bis 3, dadurch gekennzeichnet, daß dem Wärmetauscher (22) eine Mischeinrichtung (24) nachgeschaltet ist, in welcher dem vom Wärmetauscher (22) kommenden Dampf Wasser in einer von den Betriebsparametern der Brennkraftmaschine abhängigen Menge beimischbar ist.

7. Vorrichtung nach Anspruch 6, dadurch gekennzeichnet, daß die Mischeinrichtung (24) ein im Strömungsweg des Wasserdampfes liegendes Venturirohr (124) aufweist und eine Verteileinrichtung (128) vorgesehen ist, die den Zufluß von Wasser zum Düsenbereich des Venturirohres (124) steuert.

8. Vorrichtung nach Anspruch 7, dadurch gekennzeichnet, daß die Verteileinrichtung (128) über die Dosiereinrichtung (18; 154, 156) mit Wasser gespeist wird.

9. Vorrichtung nach Anspruch 8, dadurch gekennzeichnet, daß die Dosiereinrichtung (18; 154, 156) in Abhängigkeit der Temperatur im Ansaugweg (40) der Brennkraftmaschine stromabwärts der Drosselklappe (36) derart steuerbar ist, daß bei Erreichen eines Temperaturschwellwertes im Ansaugweg (40) die Wasserzufuhr zum Wärmetauscher (22) gedrosselt wird.

10. Vorrichtung nach einem der Ansprüche 8 oder 9, dadurch gekennzeichnet, daß die Dosiereinrichtung (18; 154, 156) in Abhängigkeit der Abgastemperatur im Wärmetauscher (22) derart steuerbar ist, daß die Wasserzufuhr zum Wärmetauscher (22) erst bei Erreichen eines vorbestimmten Temperaturschwellwertes erfolgt.

11. Vorrichtung nach einem der Ansprüche 8 bis 10, dadurch gekennzeichnet, daß die Dosiereinrichtung (18; 154, 156) in Abhängigkeit der Drehzahl der Brennkraftmaschine steuerbar ist.

12. Vorrichtung nach einem der Ansprüche 8 bis 11, dadurch gekennzeichnet, daß die Dosiereinrichtung (18; 154, 156) in Abhängigkeit des Unterdruckes im Ansaugweg (40) der Brennkraftmaschine in der Weise steuerbar ist, daß mit steigendem Unterdruck die Zufuhr von Wasser gedrosselt wird.

13. Vorrichtung nach Anspruch 12, dadurch gekennzeichnet, daß der Unterdruckfühler (60) als eine durch den Unterdruck im Ansaugweg (40) der Brennkraftmaschine gesteuerte Unterdruckdose (54) vorgesehen ist, die mit einem Endschalter in der Weise zusammenwirkt, daß sie bei Erreichen eines maximalen Unterdruckes in der Ansaugleitung (40) die Dosiereinrichtung (18; 154, 156) sperrt.

14. Vorrichtung nach einem der Ansprüche 9 bis 13, dadurch gekennzeichnet, daß die Steuereinrichtung (11, 162) einen mit dem Unterbrecher (64) der Brennkraftmaschine gekoppelten Impulsgeber (134) aufweist, der über eine Kippschaltung (140) einen Schalter (142) zum Ein- und Ausschalten der Erregerwicklung (114) der als Pumpe (18) ausgebildeten Dosiereinrichtung (18) betätigt und daß zwischen Impulsgeber (134) und Kippschaltung (140) vorzugsweise ein Impulsfrequenzteiler (138) zur Herabsetzung der Impulsfrequenz geschaltet ist und ein weiterer Impulsfrequenzteiler vorgesehen ist, der in Abhängigkeit der Temperatur im Ansaugweg (40) der Brennkraftmaschine derart gesteuert ist, daß er bei Überschreiten eines Temperaturschwellwertes im Ansaugweg (40) eingeschaltet wird.

15. Vorrichtung nach einem der Ansprüche 7 bis 14, dadurch gekennzeichnet, daß die Verteileinrichtung (128) als Magnetventil ausgebildet ist, das über eine elektrische Steuerschaltung (11) betätigbar ist.

16. Vorrichtung nach Anspruch 15, dadurch gekennzeichnet, daß die Steuerschaltung (11) den Temperaturfühler (50) und einen diesem nachgeschalteten Impulsformer (144) aufweist, dessen Ausgangssignal einen Schalttransistor (146) leitend schaltet, der seinerseits die Wicklung des Magnetventils (128) speist.

17. Vorrichtung nach Anspruch 16, dadurch gekennzeichnet, daß der Temperaturfühler (50) ein temperaturabhängiger Widerstand ist, dessen Widerstandswert sich innerhalb eines eng begrenzten Temperaturbereiches signifikant ändert.

18. Vorrichtung nach Anspruch 17, dadurch gekennzeichnet, daß der Widerstand ein Metalloxidwiderstand ist.

19. Vorrichtung nach einem der Ansprüche 1 bis 18, dadurch gekennzeichnet, daß die Einspeisung des Wassers und/oder Wasserdampfes in den Ansaugweg (40) der Brennkraftmaschine stromaufwärts und stromabwärts der Drosselklappe (36) erfolgt.

20. Vorrichtung nach Anspruch 19, dadurch gekennzeichnet, daß stromaufwärts etwa 75% und stromabwärts der Drosselklappe (36) etwa 25% zugeführt werden.

21. Vorrichtung nach Anspruch 19 oder 20, dadurch gekennzeichnet, daß in der Zuführleitung (190) zu der stromaufwärts der Drosselklappe (36) gelegenen Einspeisungsstelle ein Strömungswiderstand angeordnet ist, der so ausgebildet ist, daß er dem einzuspeisenden Dampf einen geringen Widerstand, der über die stromaufwärts der Drosselklappe (36) gelegene Zuführleitung (190) und die stromabwärts der Drosselklappe (36) gelegene Zuführleitung (192) angesaugten Luft jedoch einen großen Strömungswiderstand entgegensetzt.

## Claims

1. The invention relates to a device for feeding liquid and/or vaporous water into the intake manifold (40) of an internal-combustion engine containing a water tank (10), a heat exchanger (22) between the water and exhaust gas, and a heat barrier (201, 84, 98; 201, 84, 120) placed before the heat exchanger which consists of a valve (201, 84) gating backwards to the direction of the water stream and a valve element (98, 120) which can not be opened by the intake suction pressure, and further containing a dosing unit (18, 154, 156) dosing the amount of water being fed to the intake manifold, and a control unit (11, 162), controlling the dosing unit (18, 154, 156) depending from at least one parameter of operation of the internal-combustion engine, comprising a device (24, 26, 128, 11) controlling the temperature of the liquid and/or vaporous water being fed to the intake manifold (40) depending from parameters of operation which are delivered by at least one sensor placed at the internal-combustion engine e. g. a temperature sensor (48, 50), a suction pressure sensor (60), or a rotational speed sensor as a breaker contact (64).

2. Device according to claim 1, comprising the temperature sensor (50) being placed in the intake manifold (40).

3. Device according to claims 1 or 2, comprising the suction pressure sensor (60) being placed in the intake manifold (40).

4. Device according to claims 1 to 3, comprising the heat exchanger (22) downstream of which a cooling unit is placed whereby the amount of cooling medium flowing through it is under control of the parameters of operation of the internal-combustion engine.

5. Device according to claims 1 to 3, comprising the heat exchanger (22) downstream of which a vapour mixer unit is placed containing a valve unit feeding the vapour under control of parameters of operation of the internal-combustion engine to generate a vapour mixture of a given temperature.

6. Device according to claims 1 to 3, comprising the heat exchanger (22) downstream of which a mixing unit (24) is placed, and by which liquid water is mixed to the vapour coming from the heat exchanger (22), and the fed amount of liquid water being under control of the parameters of operation of the internal-combustion engine.

7. Device according to claim 6, comprising the mixing unit (24) consisting of a Venturi tube (124) which is placed into the vapour stream, and consisting of a distributor unit (128) controlling the amount of water flowing into the nozzle area of the Venturi tube (124).

8. Device according to claim 7, comprising the distributor unit (128) being fed with liquid water via the dosing unit (18; 154, 156).

9. Device according to claim 8, comprising the dosing unit (18; 154, 156) being controlled depending from the temperature in the intake manifold (40) downstream of the choke (36) in such a way, that in excess of a given temperature the amount of water flow to the heat exchanger (22) is decreased.

10. Device according to claims 8 or 9, comprising the dosing unit (18; 154, 156) being controlled depending from the exhaust gas temperature in the heat exchanger (22) in such a way, that the water is fed to the heat exchanger (22) while a given temperature is exceeded.

11. Device according to claims 8 to 10, comprising the dosing unit (18; 154, 156) being controlled depending from the rotational speed of the engine.

12. Device according to claims 8 to 11, comprising the dosing unit (18; 154, 156) being controlled depending from the suction pressure in the intake manifold (40) in such a way, that the amount of water decreases when the suction increases, i. e. the absolute pressure decreases.

13. Device according to claim 12, comprising the suction pressure sensor (60) consisting of a vacuum chamber (54) which is connected to the intake manifold (40), and which acts on a switch in such a way, that at a given maximum pressure the dosing unit (18; 154, 156) is closed.

14. Device according to claims 9 to 13, comprising the control unit (11, 162) containing a pulse circuit (134) which is connected to the breaker (64), and which is driving via a monostable multivibrator (140) and via a switching circuit (142) a coil (114) of a pump (18) being the dosing unit (18), and containing between the pulse circuit (134) and the monostable multivibrator (140) preferably a frequency divider circuit (138) for reducing the pulse frequency, and a controllable frequency divider circuit which is switched on depending from the temperature in the intake manifold (40), while a given temperature is exceeded.

15. Device according to claims 7 to 14, comprising the distributor unit (128) being an electromagnetic valve which is driven by the control unit (11).

16. Device according to claim 15, comprising the control unit (11), containing the temperature sensor (50) which is connected to the imput of a pulse former circuit (144) the output of which is connected to a switching transistor (146) which feeds the coil of the electromagnetic valve (128) being the distributor unit.

17. Device according to claim 16, comprising the temperature sensor (50) being a temperature dependent resistor, the resistance of which is changing significantly in a narrow temperature range.

18. Device according to claim 17, comprising the resistor being a metal oxide resistor.

19. Device according to claims 1 to 18, comprising the feeding of the liquid and/or vaporous water into the intake manifold (40) upstream and downstream of the choke (36).

20. Device according to claim 19, comprising the feeding of 75% of the water upstream, and 25% downstream of the choke (36).

21. Device according to claims 19 or 20, comprising a flow resistance in the pipe (190) leading to the feed point upstream of the choke (36) which has such characteristics, that it represents small resistances to the vapour fed through the pipe (190) upstream of the choke (36), and through a pipe (192) downstream of the choke (36), but it represents a large resistance against sucking air through them.

**Revendications**

1. Dispositif pour introduire de l'eau à l'état liquide et/ou de vapeur dans le chemin d'aspiration (40) d'un moteur à combustion interne, comprenant un réservoir d'eau (10), un échangeur de chaleur (22) à l'admission d'une part par le gaz brûlé du moteur à combustion interne et d'autre part par l'eau, et un arrêt de chaleur (201, 84, 98; 201, 84, 120), arrangé devant l'échangeur de chaleur et composé d'une valve coupant en direction de contre-courant (201, 84) et un élément à valve (98, 120) non-ouvrant par dépression d'aspiration, et un dispositif à doser (18, 154, 156) pour le dosage de la quantité d'eau à alimenter au chemin d'aspiration, et un dispositif de contrôle (11, 162) réglant le dispositif de doser (18, 154, 156) en dépendance, au moins, d'un paramètre de service du moteur à combustion interne, caractérisé par l'allocation d'un dispositif (24, 26, 128, 11) réglant la température de l'eau et/ou vapeur d'eau alimenté au chemin d'aspiration (40) en dépendance de paramètres de service lesquels ont été déterminés au moins par un détecteur monté au moteur à combustion interne, par exemple palpeur de température (48, 50), palpeur de dépression (60) ou palpeur de vitesse comme interrupteur (64).

2. Dispositif suivant spécification 1, caractérisé par le fait que le palpeur de température (50) est arrangé dans le chemin d'aspiration (40).

3. Dispositif suivant spécification 1 ou 2, caractérisé par le fait que le palpeur de dépression (60) est arrangé dans le chemin d'aspiration (40).

4. Dispositif suivant l'une des spécifications 1 à 3, caractérisé par le fait que l'échangeur de chaleur (22) est suivi par un radiateur et que le débit du réfrigérant est réglable en dépendance des paramètres de service du moteur à combustion interne.

5. Dispositif suivant l'une des spécifications 1 à 3, caractérisé par le fait que l'échangeur de chaleur (22) est suivi par un mélangeur de vapeur avec un appareil à valve, réglable par les paramètres de service du moteur à combustion interne, pour alimentation d'une vapeur, afin de régler un mélange de vapeur d'une température déterminée.

6. Dispositif suivant l'une des spécifications 1 à 3, caractérisé par le fait que l'échangeur de chaleur (22) est suivi par un mélangeur (24) permettant d'ajouter de l'eau à la vapeur arrivant de l'échangeur de chaleur (22) dans une quantité dépendant des paramètres de service du moteur à combustion interne.

7. Dispositif suivant spécification 6, caractérisé par le fait que le mélangeur (24) est équipé d'un venturi (124) placé dans le chemin de flux de la vapeur d'eau et qu'un appareil de distribution (128) est prévu pour conduire la venue d'eau à la zone de tuyères du venturi (124).

8. Dispositif suivant spécification 7, caractérisé par le fait que l'appareil de distribution (128) est alimenté d'eau moyennant le dispositif à doser (18; 154, 156).

9. Dispositif suivant spécification 8, caractérisé par le fait que le dispositif à doser (18; 154, 156) est réglable en aval du papillon (36) de telle façon, en dépendance de la température dans le chemin d'aspiration (40) du moteur à combustion interne, que l'alimentation d'eau à l'échangeur de chaleur (22) est reduite en arrivant à une valeur seuil de température dans le chemin d'aspiration (40).

10. Dispositif suivant l'une des spécifications 8 ou 9, caractérisé par le fait que le dispositif à doser (18; 154, 156) est réglable de telle façon, en dépendance de la température du gaz brûlé dans l'échangeur de chaleur (22), que l'alimentation d'eau à l'échangeur de chaleur (22) n'a lieu qu'en arrivant à une valeur seuil déterminée de la température.

11. Dispositif suivant l'une des spécifications 8 à 10, caractérisé par le fait que le dispositif à doser (18; 154, 56) est réglable en dépendance de la vitesse du moteur à combustion interne.

12. Dispositif suivant l'une des spécifications 8 à 11, caractérisé par le fait que le dispositif à doser (18; 154, 56) est réglable de telle façon, en dépendance de la dépression dans le chemin d'aspiration (40) du moteur à combustion interne, que l'alimentation de l'eau est reduite dans la mesure que la dépression monte.

13. Dispositif suivant spécification 12, caractérisé par le fait que le palpeur à dépression (60) est prévu comme boîte à dépression (54) réglée par la dépression dans le chemin d'aspiration (40) du moteur à combustion interne, conspirant avec un interrupteur de fin de course de telle façon qu'elle arrête le dispositif à doser (18; 154, 156) lorsqu'on arrive à une dépression maximale dans la conduite d'aspiration (40).

14. Dispositif suivant l'une des spécification 9 à 13, caractérisé par le fait que le mécanisme de réglage (11, 162) présente un contacteur (134) accouplé à l'interrupteur (64) du moteur à combustion interne, opérant à l'aide d'une connexion flip-flop (140) un interrupteur (142) pour mettre dans le circuit ou hors de circuit l'inducteur (114) du dispositif à doser (18) du type pompe (18), et qu'un diviseur à fréquence d'impulsions (138) est monté de préférence entre contacteur (134) et connexion flip-flop (140) pour reduire la fréquence d'impulsions, et qu'un diviseur additionnel à fréquence d'impulsions est prévu lequel est conduit, en dépendance de la température dans le chemin d'aspiration (40) du moteur à combustion interne, de telle façon qu'il sera mis dans le circuit quand une valeur seuil de température dans le chemin d'aspiration (40) est surpassée.

15. Dispositif suivant l'une des spécifications 7 à 14, caractérisé par le fait que l'appareil de distribution (128) est du type valve magnétique laquelle peut être opérée à l'aide d'un réglage électrique (11).

16. Dispositif suivant spécification 15, caractérisé par le fait que le circuit (11) montre le palpeur de température (50) suivi par le formateur des impulsions (144), dont le signal de sortie relie un transisteur de couplage (146) comme conducteur, lequel, de son côté, alimente le bobinage de la valve magnétique (128).

17. Dispositif suivant spécification 16, caractérisé par le fait que le palpeur de température (50) est une thermistance dont la valeur de la résistance change d'une forme signifiante dans les limites étroites d'une étendue de températures.

18. Dispositif suivant spécification 17, caractérisé par le fait que le résistance est une résistance d'oxyde métallique.

19. Dispositif suivant l'une des spécifications 1 à 18, caractérisé par le fait que l'alimentation de l'eau et/ou de la vapeur d'eau dans le chemin d'aspiration (40) du moteur à combustion interne a lieu en amont et en aval du papillon (36).

20. Dispositif suivant spécification 19, caractérisé par le fait que le pourcentage alimenté en amont du papillon (36) est d'env. 75% et en aval du papillon (36) d'env. 25%.

21. Dispositif suivant spécification 19 ou 20, caractérisé par le fait qu'une résistance hydraulique est montée dans la conduite (190) allant au point d'alimentation se trouvant en amont du papillon (36), laquelle est développée de telle façon qu'elle fait peu de résistance à la vapeur d'eau à alimenter, mais grande résistance hydraulique à l'air aspiré par la conduite (190) placée en amont du papillon (36) et par la conduite (192) placée en aval du papillon (36).

Fig.1

F I G . 2

0 009 779

Fig.4

Fig.3

Fig5

Fig.6